# EUROPEAN PATENT APPLICATION

(11) **EP 4 510 239 A1**
(43) Date of publication of application: **19.02.2025**
(21) Application number: 22964879.5
(22) Date of filing: 11.11.2022
(51) Int. Cl.: H01M 4/62

(54) **PREPARATION METHOD FOR POSITIVE ELECTRODE SLURRY, POSITIVE ELECTRODE SHEET, SECONDARY BATTERY, BATTERY MODULE, BATTERY PACK AND ELECTRICAL DEVICE**

(71) Applicant: Contemporary Amperex Technology Co., Limited, Ningde, Fujian 352100 (CN)
(72) Inventor: XING, Qi, Ningde, Fujian 352100 (CN); SUN, Chengdong, Ningde, Fujian 352100 (CN); LIU, Huihui, Ningde, Fujian 352100 (CN); DUAN, Lianwei, Ningde, Fujian 352100 (CN)
(74) Representative: Jacob, Reuben Ellis
(86) International application number: PCT/CN2022/131511
(87) International publication number: WO 2024/098411

(57) **Abstract**

The present application provides a preparation method for positive electrode slurry, a positive electrode sheet, a secondary battery, a battery module, a battery pack and an electrical device. The preparation method comprises first stirring, second stirring, third stirring and fourth stirring; in the first stirring, mixing and stirring a positive electrode active material, a conductive agent and a first binder to prepare a dry mixture; in the second stirring, mixing and stirring a second binder and a solvent to prepare a glue; in the third stirring, mixing and stirring the dry mixture and the glue to prepare primary slurry; and in the fourth stirring, mixing and stirring the solvent and the primary slurry to prepare the positive electrode slurry, wherein the weight average molecular weight of a polymer in the second binder is less than the weight average molecular weight of any polymer in the first binder.

## Description

### TECHNICAL FIELD

The present application relates to the technical field of secondary batteries, and in particular to a preparation method of a positive electrode slurry, as well as a positive electrode plate, a secondary battery, a battery module, a battery pack and an electrical apparatus.

### BACKGROUND

In recent years, with the increasingly wide use of secondary batteries, secondary batteries are widely used in energy storage power systems such as water power, thermal power, wind power and solar power stations, as well as power tools, electric bicycles, electric motorcycles, electric vehicles, military equipment, aerospace and other fields.

Electrode slurry is the basis for forming electrodes and is also the first process in secondary battery production. The properties of the electrode slurry have a significant impact on subsequent electrode production and battery performance. Positive electrode slurry is mainly a solid-liquid phase mixed system formed by positive electrode active materials, conductive agents, binders and solvents. The system is in a metastable state, and the slurry mixing process, that is, the slurry preparation method, has a crucial impact on the dispersion, uniformity, stability and other properties of the slurry. The slurry mixing process in the prior art is often a one-step method, where the slurry is obtained by directly mixing and stirring the various components in the positive electrode active slurry. The prepared slurry has a high discharged viscosity, and is prone to abnormal phenomena such as gelation and precipitation, which affects subsequent coating, rolling processes and the quality of electrode plates.

### SUMMARY OF THE INVENTION

The present application is made in view of the above-mentioned issues, and it is intended to provide a method for preparing a positive electrode slurry for secondary batteries to reduce the discharge viscosity of the positive electrode slurry, broaden the process window for positive electrode slurry coating, and improve the processability of the positive electrode slurry.

A first aspect of the present application provides a preparation method of a positive electrode slurry, which includes a first stirring, a second stirring, a third stirring and a fourth stirring;
in the first stirring, a positive electrode active material, a conductive agent and a first binder are mixed and stirred to prepare a dry mixture;
in the second stirring, a second binder and a solvent are mixed and stirred to prepare an adhesive solution;
in the third stirring, the dry mixture and the adhesive solution are mixed and stirred to prepare a primary slurry; and
in the fourth stirring, a solvent and the primary slurry are mixed and stirred to prepare the positive electrode slurry;
wherein, the weight average molecular weight of a polymer in the second binder is smaller than the weight average molecular weight of any polymer in the first binder.

In the present application, the discharge viscosity of the positive electrode slurry is reduced and the processability of the positive electrode slurry is improved by using the second binder with a low molecular weight and the first binder with a relatively high molecular weight in combination in different steps, and this method has broad versatility and can be applied to the preparation of slurries comprising new-generation high molecular weight polymer binders.

The positive electrode slurry prepared by the preparation method disclosed in the present application can effectively exert the properties of polyvinylidene fluoride binders of different molecular weights, and through the mutual cooperation and steric hindrance of large and small chain segments, the slurry has appropriate viscosity and excellent processability.

In any of embodiments, the second binder is polyvinylidene fluoride with a weight average molecular weight of no more than 4 million.

Controlling the second binder to be polyvinylidene fluoride with a weight average molecular weight of no more than 4 million can effectively reduce the discharge viscosity and viscosity after standing for 24 h of the positive electrode slurry, slow down the gelation of the positive electrode slurry, improve the filtration performance of the positive electrode slurry, and enhance the binding performance of the positive electrode plate.

In any of embodiments, the second binder is polyvinylidene fluoride with a weight average molecular weight of no more than 2 million.

The second binder is polyvinylidene fluoride with a weight average molecular weight of no more than 2 million, which can significantly reduce the discharge viscosity and viscosity after standing for 24 h of the positive electrode slurry, slow down the gelation of the positive electrode slurry, improve the filtration performance of the positive electrode slurry, and enhance the binding performance of the positive electrode plate to a great extent.

In any of embodiments, the second binder is polyvinylidene fluoride with a weight average molecular weight of no more than 1.5 million.

The second binder is polyvinylidene fluoride with a weight average molecular weight of no more than 1.5 million, which is conducive to further reducing the discharge viscosity and viscosity after standing for 24 h of the positive electrode slurry, greatly slowing down the gelation of the positive electrode slurry and improving the filtration performance of the positive electrode slurry.

In any of embodiments, the first binder comprises polyvinylidene fluoride with one or more weight average molecular weights, and the first binder comprises polyvinylidene fluoride with a weight average molecular weight of no less than 2 million.

In any of embodiments, the first binder comprises polyvinylidene fluoride with a weight average molecular weight of no less than 4 million.

The preparation method disclosed in the present application has universal applicability to low weight average molecular weight polyvinylidene fluoride binders and high weight average molecular weight polyvinylidene fluoride binders, so that the positive electrode slurry comprising binders with weight average molecular weights up to 8 million still has a suitable viscosity, and the electrode plates prepared from the positive electrode slurry have excellent binding performance and can meet the needs of new-generation binders.

In any of embodiments, the mass content of the second binder is 30% to 50%, based on the total mass of the first binder and the second binder.

The mass content of the second binder is controlled to be 30%-50%, based on the total mass of the first binder and the second binder, which can effectively reduce the discharge viscosity and viscosity after standing for 24 h of the positive electrode slurry, slow down the gelation of the positive electrode slurry, improve the filtration performance of the positive electrode slurry, improve the binding performance of the positive electrode plate, and also help to reduce production costs.

In any of embodiments, the revolution velocity of the first stirring is 10 rpm to 20 rpm.

Controlling the revolution velocity of the first stirring to be 10 rpm to 20 rpm can effectively reduce the discharge viscosity and viscosity after standing for 24 h of the positive electrode slurry, improve the filtration performance of the positive electrode slurry, enhance the binding performance of the positive electrode plate, and also help to reduce production costs.

In any of embodiments, the stirring time of the first stirring is 10 min to 25 min.

Controlling the stirring time of the first stirring to be 10 min to 25 min can effectively reduce the discharge viscosity and viscosity after standing for 24 h of the positive electrode slurry, slow down the gelation of the positive electrode slurry, improve the filtration performance of the positive electrode slurry, enhance the binding performance of the positive electrode plate, and also help to improve production efficiency and reduce production costs.

In any of embodiments, the revolution velocity of the second stirring is 20 rpm to 30 rpm.

Controlling the revolution velocity of the second stirring to be 20 rpm to 30 rpm can effectively reduce the discharge viscosity and viscosity after standing for 24 h of the positive electrode slurry, slow down the gelation of the positive electrode slurry, improve the filtration performance of the positive electrode slurry, enhance the binding performance of the positive electrode plate, and help to reduce production costs.

In any of embodiments, the rotation velocity of the second stirring is 1000 rpm to 1400 rpm.

Controlling the rotation velocity of the second stirring to be 1000 rpm to 1400 rpm can effectively reduce the discharge viscosity and viscosity after standing for 24 h of the positive electrode slurry, slow down the gelation of the positive electrode slurry, improve the filtration performance of the positive electrode slurry and enhance the binding performance of the positive electrode plate, and also help to reduce production costs.

In any of embodiments, the stirring time of the second stirring is 60 min to 90 min.

Controlling the stirring time of the second stirring to be 60 min to 90 min can effectively reduce the discharge viscosity and viscosity after standing for 24 h of the positive electrode slurry, slow down the gelation of the positive electrode slurry, improve the filtration performance of the positive electrode slurry and enhance the binding performance of the positive electrode plate, and also help to improve production efficiency and reduce production costs.

In any of embodiments, for the third stirring, the stirring time is 60 min to 90 min, the revolution velocity is 20 rpm to 30 rpm, and the rotation velocity is 500 rpm to 800 rpm.

In the third stirring, the dry mixture prepared in the first stirring is added to the adhesive solution prepared in the second stirring and stirred slowly to reduce the risk of agglomeration and gelation of the high molecular weight polymer in the first binder and improve the uniformity of kneading of materials.

In any of embodiments, for the fourth stirring, the revolution velocity is 20 rpm to 30 rpm, the rotation velocity is 1000 rpm to 1400 rpm, and the stirring time is 90 min to 120 min.

In the fourth stirring, by rapidly stirring at a high stirring rotation velocity, the materials are fully mixed and dispersed, so that the slurry meets the processability and electrical performance of lithium-ion batteries.

In any of embodiments, the solid content of the positive electrode slurry is 63% to 73%, and the initial viscosity of the positive electrode slurry is 8000 mPa·s to 35000 mPa·s.

The slurry formed by the preparation method of the present application has high solid content, suitable viscosity, and excellent processability. The above slurry can be directly used in the subsequent coating process, which can improve production efficiency.

In any of embodiments, the solvent used in the second stirring and the solvent used in the fourth stirring are the same, and based on the total mass of the conductive agent, the positive electrode active material, the first binder, and the second binder, the mass content of the solvent used in the second stirring is 35% to 40%, and the mass content of the solvent used in the fourth stirring is 5% to 10%.

In any of embodiments, in the positive electrode slurry, the ratio of the mass of the positive electrode active material, the total mass of the first binder and the second binder, and the mass of the conductive agent is (82-95):(3-10):(2-8).

The positive electrode slurry within the above range not only has good processability, but also makes the formed positive electrode plate have excellent electrochemical performance.

In any of embodiments, the positive electrode active material is one or more of lithium iron phosphate, lithium cobalt oxide, and lithium manganate.

In any of embodiments, the conductive agent is one or more of conductive carbon black, graphite, and carbon nanotubes.

A second aspect of the present application further provides a positive electrode slurry, which is prepared by the preparation method of the positive electrode slurry of the first aspect.

In any of embodiments, the viscosity of the positive electrode slurry is 8000 mPa·s to 35000 mPa·s, and after standing for 24 h, the viscosity of the positive electrode slurry does not exceed 48000 mPa·s.

The positive electrode slurry provided by the present application has suitable viscosity, excellent stability, and good processability.

A third aspect of the present application further provides a positive electrode plate, which comprises a positive electrode current collector and a positive electrode film layer arranged on at least one surface of the positive electrode current collector, and the positive electrode film layer is prepared from the positive electrode slurry prepared by the preparation method according to the first aspect of the present application. The positive electrode plate has high uniformity and adhesion.

In any of embodiments, the binding force per unit length between the positive electrode film layer and the positive electrode current collector is greater than 20 N/m. The positive electrode plate has high binding strength between the positive electrode film layer and the positive electrode current collector. During use, the positive electrode film layer will not easily fall off from the positive electrode current collector, which helps to improve the cycling performance and safety of the battery.

A fourth aspect of the present application further provides a secondary battery comprising a positive electrode plate, a separator, a negative electrode plate and an electrolyte solution. The positive electrode plate is prepared from the positive electrode slurry prepared by the preparation method according to the first aspect or the positive electrode slurry according to the second aspect.

In any of embodiments, the secondary battery is any one of a lithium-ion battery, a sodium-ion battery, a magnesium-ion battery, and a potassium-ion battery.

A fifth aspect of the present application further provides a battery module comprising the secondary battery according to the fourth aspect of the present application.

A sixth aspect of the present application provides a battery pack comprising the secondary battery according to the fourth aspect of the present application or the battery module according to the fifth aspect of the present application.

A seventh aspect of the present application provides an electrical apparatus comprising at least one selected from the secondary battery according to the fourth aspect of the present application, the battery module according to the fifth aspect of the present application, or the battery pack according to the sixth aspect of the present application.

### DESCRIPTION OF DRAWINGS

Fig. 1 is a schematic diagram of a secondary battery according to an embodiment of the present application;
Fig. 2 is an exploded view of the secondary battery according to an embodiment of the present application shown in Fig. 1;
Fig. 3 is a schematic diagram of a battery module according to an embodiment of the present application;
Fig. 4 is a schematic diagram of a battery pack according to an embodiment of the present application;
Fig. 5 is an exploded view of the battery pack according to an embodiment of the present application shown in Fig. 4;
Fig. 6 is a schematic diagram of an electrical apparatus in which a secondary battery is used as a power source according to an embodiment of the present application.

Description of reference numerals:
1 battery pack; 2 upper box; 3 lower box; 4 battery module; 5 secondary battery; 51 case; 52 electrode assembly; 53 cover plate.

### DETAILED DESCRIPTION

Hereinafter, embodiments of the binder, preparation method, electrode, battery and electrical apparatus of the present application are described in detail and specifically disclosed with reference to the drawings as appropriate. However, there may be cases where unnecessary detailed description is omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

"Ranges" disclosed in the present application are defined in the form of lower limits and upper limits, a given range is defined by the selection of a lower limit and an upper limit, and the selected lower limit and upper limit define boundaries of a particular range. A range defined in this manner may be inclusive or exclusive of end values, and may be arbitrarily combined, that is, any lower limit may be combined with any upper limit to form a range. For example, if the ranges of 60-120 and 80-110 are listed for a particular parameter, it is understood that the ranges of 60-110 and 80-120 are also contemplated. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a to b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method comprises steps (a) and (b), meaning that the method may comprise steps (a) and (b) performed sequentially, or may comprise steps (b) and (a) performed sequentially. For example, the reference to the method may further include step (c), meaning that step (c) may be added to the method in any order. For example, the method may include steps (a), (b) and (c), or may further include steps (a), (c) and (b), or may further include steps (c), (a) and (b), and the like.

Unless otherwise specifically stated, the terms "including" and "comprising" mentioned in the present application may be open-ended, or may be closed-ended. For example, the "including" and "comprising" may indicate that it is also possible to include or comprise other components not listed, and it is also possible to include or comprise only the listed components.

Unless otherwise specifically stated, the term "or" is inclusive in the present application. For example, the phrase "A or B" means "A, B, or both A and B." More specifically, the condition "A or B" is satisfied under any one of the following conditions: A is true (or present) and B is false (or absent); A is false (or absent) and B is true (or present); or both A and B are true (or present).

Positive electrode slurry is mainly a solid-liquid phase mixed system formed by positive electrode active materials, conductive agents, binders and solvents. In order to improve the uniformity of distribution of different components in the system, slurry mixing is often performed through stirring, ball milling, ultrasonic and other processes. However, the slurry combining process in the prior art is usually only applicable to slurry systems with fixed components and has poor versatility, and when the physical properties of the components in the slurry change, the slurry combining process often needs to be adjusted. For example, the slurry mixing process in the prior art cannot be applied to high molecular weight binders. After extensive research, the applicant found that high molecular weight binders can effectively reduce the amount of binder in the electrode plates and help increase the load of the electrode plates. However, slurries comprising high molecular weight binders often have high discharge viscosity, and the slurry is easy to gel, making it difficult to meet the production needs of electrode plates.

### [Positive electrode slurry]

Based on this, the present application provides a preparation method of a positive electrode slurry, including a first stirring, a second stirring, a third stirring and a fourth stirring; in the first stirring, a positive electrode active material, a conductive agent and a first binder are mixed to prepare a dry mixture; in the second stirring, a second binder and a solvent are mixed and stirred to prepare an adhesive solution; in the third stirring, the dry mixture and the adhesive solution are mixed and stirred to prepare a primary slurry; in the fourth stirring, a solvent and the primary slurry are mixed and stirred to prepare a positive electrode slurry; wherein the weight average molecular weight of the polymer in the second binder is smaller than the weight average molecular weight of any polymer in the first binder.

In some embodiments, the positive electrode active material is one or more of lithium iron phosphate, lithium cobalt oxide, and lithium manganate.

In some embodiments, the conductive agent includes one or more of conductive carbon black, graphite, and carbon nanotubes.

In some embodiments, the solvent is an aqueous solvent, such as deionized water. In some embodiments, the solvent is an oily medium selected from one or more of N-methyl-pyrrolidone, N,N-dimethylpropionamide, N,N-diethylpropionamide, N,N-dipropylpropionamide, N,N-dibutylpropionamide, N,N-dimethylethylpropionamide and 3-butoxy-N-methylpropionamide.

In this preparation method, the positive electrode active material, the conductive agent and the first binder with a higher molecular weight are first stirred to obtain the dry mixture, and the first stirring causes the three to be mechanically riveted to form a tight entanglement; and then the second binder is mixed with the solvent for the second stirring to prepare an adhesive solution, and the weight average molecular weight of the polymer in the second binder is less than the weight average molecular weight of any polymer in the binder, and the preparation of the adhesive solution with a lower viscosity is beneficial to the subsequent dispersion of the dry mixture comprising large molecular weight polymers in the adhesive solution; then the dry mixture prepared by the first stirring is mixed with the adhesive solution for the third stirring to prepare the primary slurry, the third stirring can effectively disperse the positive electrode active material and the conductive agent in the adhesive solution, and the binder in the adhesive solution can improve the stability of the slurry through electrostatic interaction and steric hindrance, and reduce the agglomeration and sedimentation of the positive electrode active material and the conductive agent; finally, the solvent is mixed with the primary slurry for the fourth stirring to obtain the positive electrode slurry, and in the fourth stirring, the solvent added additionally can effectively adjust the discharge viscosity of the slurry to prevent the discharge viscosity from being too high and affecting subsequent coating.

In the present application, the discharge viscosity of the positive electrode slurry is reduced and the processability of the positive electrode slurry is improved by mixing a second binder with a low molecular weight and a first binder with a relatively high molecular weight in different steps, and this method has broad versatility and can be applied to the preparation of slurries comprising new-generation high molecular weight polymer binders.

In some embodiments, the second binder is polyvinylidene fluoride with a weight average molecular weight of no more than 4 million.

Controlling the second binder to be polyvinylidene fluoride with a weight average molecular weight of no more than 4 million can effectively reduce the discharge viscosity and viscosity after standing for 24 h of the positive electrode slurry, slow down the gelation of the positive electrode slurry, improve the filtration performance of the positive electrode slurry, and enhance the binding performance of the positive electrode plate.

In some embodiments, the weight average molecular weight of polyvinylidene fluoride in the second binder is optionally any one of 0.1 million, 0.2 million, 0.3 million, 0.4 million, 0.5 million, 0.6 million, 0.7 million, 0.8 million, 0.9 million, 1 million, 1.1 million, 1.2 million, 1.3 million, 1.4 million, 1.5 million, 1.6 million, 1.7 million, 1.8 million, 1.9 million, 2 million, 2.5 million, 3 million, 3.5 million, 4 million.

Herein, the term "weight average molecular weight" refers to the average molecular weight of a polymer in unit weight, accord to the statistical average molecular weight of the polymer by mass. In the present application, the weight average molecular weight of the polymer can be tested using methods known in the art. As an example, it is tested using gel chromatography, such as using Waters 2695 Isocratic HPLC gel chromatograph (differential refraction detector 2141). A polystyrene solution sample with a mass fraction of 3.0% is used as a reference, and a matching chromatographic column (oily: Styragel HT5DMF7.8×300 mm+Styragel HT4) is selected. A 3.0% polymer solution is prepared using purified N-methyl pyrrolidone (NMP) solvent, and the prepared solution is allowed to stand for one day for later use. When testing, tetrahydrofuran is first drawn in with a syringe for rinsing, which is repeated several times. Then 5 ml of the test solution is drawn in, the air in the syringe is removed, and the needle tip is wiped dry. Finally, the sample solution is slowly injected into the injection port. After the display is stable, the data is obtained and the weight average molecular weight is read.

In some embodiments, the second binder is polyvinylidene fluoride with a weight average molecular weight of no more than 2 million.

The second binder is controlled to be polyvinylidene fluoride with a weight average molecular weight of no more than 2 million, which can further reduce the discharge viscosity and viscosity after standing for 24 h of the positive electrode slurry, and slow down the gelation of the positive electrode slurry and improve the filtration performance of the positive electrode slurry to a greater extent.

In some embodiments, the second binder is polyvinylidene fluoride with a weight average molecular weight of no more than 1.5 million.

The second binder is controlled to be polyvinylidene fluoride with a weight average molecular weight of no more than 1.5 million, which can still further reduce the discharge viscosity and viscosity after standing for 24 h of the positive electrode slurry, and greatly slow down the gelation of the positive electrode slurry and improve the filtration performance of the positive electrode slurry.

In some embodiments, the first binder comprises polyvinylidene fluoride with one or more weight average molecular weights, and the first binder comprises polyvinylidene fluoride with a weight average molecular weight of no less than 2 million. In some embodiments, the first binder comprises a single polyvinylidene fluoride with a weight average molecular weight of no less than 2 million. In some embodiments, the first binder includes two or more polyvinylidene fluorides with different weight average molecular weights, and at least one of the polyvinylidene fluorides has a weight average molecular weight of no less than 2 million. In some embodiments, the first binder comprises polyvinylidene fluoride with a weight average molecular weight of no less than 4 million.

The weight average molecular weight of polyvinylidene fluoride with a weight average molecular weight of no less than 2 million is optionally any one or more of 2 million, 2.5 million, 3 million, 3.5 million, 4 million, 4.5 million, 5 million, 5.5 million, 6 million, 6.5 million, 7 million, 7.5 million, 8 million, 8.5 million, 9 million.

The preparation method of a positive electrode slurry in the prior art has poor compatibility, cannot meet the preparation needs of binders with different molecular weights, and cannot perform high-quality slurry mixing of new-generation high molecular weight polymer binders. The preparation method disclosed in the present application is versatile and suitable for binders with different weight average molecular weights. It can especially meet the preparation needs of new-generation high molecular weight polymer binders, effectively reduce the discharge viscosity and viscosity after standing for 24 h of the positive electrode slurry, and help to improve the coatability and processability of the positive electrode slurry.

In some embodiments, the mass content of the second binder is 30% to 50%, based on the total mass of the first binder and the second binder. In some embodiments, the mass content of the second binder is optionally any one of 30%, 32%, 34%, 35%, 36%, 38%, 40%, 42%, 44%, 45%, 46%, 48%, 50%.

Based on the total mass of the first binder and the second binder, the mass content of the second binder is controlled to be 30% to 50%, which can not only give full play to the strong binding performance of the high molecular weight polymer in the first binder and improve the binding performance of the positive electrode plate, but also ensure the processability of the positive electrode slurry, ensuring that it has low discharge viscosity and viscosity after standing for 24 h, and excellent anti-gelation and filtrability.

In some embodiments, the rotation velocity of the first stirring is 0. In some embodiments, the revolution velocity of the first stirring is 10 rpm to 20 rpm. In some embodiments, the revolution velocity of the first stirring is optionally any one of 10 rpm, 11 rpm, 12 rpm, 13 rpm, 14 rpm, 15 rpm, 16 rpm, 17 rpm, 18 rpm, 19 rpm, 20 rpm.

Herein, the term" rotation velocity" refers to the speed at which the stirrer rotates about its own axis.

Herein, the term "revolution velocity" refers to the speed at which the stirrer rotates around the kettle that is loaded with materials.

In some embodiments, the stirrer is a planetary stirrer. The working principle of the planetary stirrer is that after the stirrer is started, the planet carrier rotates, driving the stirring shaft in the box to rotate, and it rotates at high speed while revolving around the axis of the barrel, so that the material is subjected to strong shearing and kneading. It can be understood that the preparation method provided in the present application is suitable for any type of planetary stirrer.

Controlling the rotation velocity of the first stirring to be 0 can reduce damage to the material during the dry mixing process. Controlling the revolution velocity of the first stirring to be 10 rpm to 20 rpm can effectively reduce the discharge viscosity and viscosity after standing for 24 h of the positive electrode slurry, improve the filtration performance of the positive electrode slurry, enhance the binding performance of the positive electrode plate, and also help to reduce production costs.

In some embodiments, the stirring time of the first stirring is 10 min to 25 min. In some embodiments, the stirring time of the first stirring is optionally any one of 10 min, 12 min, 14 min, 15 min, 16 min, 18 min, 20 min, 22 min, 24 min, and 25 min.

Controlling the stirring time of the first stirring to be 10 min to 25 min can effectively reduce the discharge viscosity and viscosity after standing for 24 h of the positive electrode slurry, slow down the gelation of the positive electrode slurry, improve the filtration performance of the positive electrode slurry and enhance the binding performance of the positive electrode plate, and also help to improve production efficiency and reduce production costs.

In some embodiments, the revolution velocity of the second stirring is 20 rpm to 30 rpm. In some embodiments, the revolution velocity of the second stirring is optionally any one of 20 rpm, 21 rpm, 22 rpm, 23 rpm, 24 rpm, 25 rpm, 26 rpm, 27 rpm, 28 rpm, 29 rpm, 30 rpm.

Controlling the revolution velocity of the second stirring to be 20 rpm to 30 rpm can effectively reduce the discharge viscosity and viscosity after standing for 24 h of the positive electrode slurry, slow down the gelation of the positive electrode slurry, improve the filtration performance of the positive electrode slurry and enhance the binding performance of the positive electrode plate, and also help to reduce production costs.

In some embodiments, the rotation velocity of the second stirring is 1000 rpm to 1400 rpm. In some embodiments, the rotation velocity of the second stirring is optionally any one of 1000 rpm, 1050 rpm, 1100 rpm, 1150 rpm, 1200 rpm, 1250 rpm, 1300 rpm, 1350 rpm, 1400 rpm.

Controlling the rotation velocity of the second stirring to be 1000 rpm to 1400 rpm can effectively reduce the discharge viscosity and viscosity after standing for 24 h of the positive electrode slurry, slow down the gelation of the positive electrode slurry, improve the filtration performance of the positive electrode slurry and enhance the binding performance of the positive electrode plate, and also help to reduce production costs.

In some embodiments, the stirring time of the second stirring is 60 min to 90 min. In some embodiments, the stirring time of the second stirring is optionally any one of 60 min, 62 min, 65 min, 68 min, 70 min, 73 min, 75 min, 77 min, 80 min, 85 min, 90 min.

Controlling the stirring time of the second stirring to be 60 min to 90 min can effectively reduce the discharge viscosity and viscosity after standing for 24 h of the positive electrode slurry, slow down the gelation of the positive electrode slurry, improve the filtration performance of the positive electrode slurry and enhance the binding performance of the positive electrode plate, and also help to improve production efficiency and reduce production costs.

In some embodiments, for the third stirring, the stirring time is 60 min to 90 min, the revolution velocity is 20 rpm to 30 rpm, and the rotation velocity is 500 rpm to 800 rpm.

In some embodiments, the stirring time of the third stirring is optionally any one of 60 min, 70 min, 80 min, 90 min. In some embodiments, the revolution velocity is optionally any one of 20 rpm, 25 rpm, 30 rpm. In some embodiments, the rotation velocity is optionally any one of 500 rpm, 550 rpm, 600 rpm, 650 rpm, 700 rpm, 750 rpm, and 800 rpm.

In the third stirring, the dry mixture prepared in the first stirring is added to the adhesive solution prepared in the second stirring and stirred slowly to reduce the risk of agglomeration and gelation of the high molecular weight polymer in the first binder and increase the uniformity of kneading of materials.

In some embodiments, for the fourth stirring, the revolution velocity is 20 rpm to 30 rpm, the rotation velocity is 1000 rpm to 1400 rpm, and the stirring time is 90 min to 120 min.

In some embodiments, the revolution velocity of the fourth stirring is optionally 20 rpm, 25 rpm, or 30 rpm. In some embodiments, the rotation velocity is optionally 1000 rpm, 1100 rpm, 1200 rpm, 1300 rpm or 1400 rpm. In some embodiments, the stirring time is optionally 90 min, 100 min, 110 min or 120 min.

In some embodiments, in the fourth stirring, by rapidly stirring at a high stirring rotation velocity, the materials are fully mixed and dispersed, so that the slurry meets the processability and electrical performance of lithium-ion batteries.

In any of embodiments, the solid content of the positive electrode slurry is 63% to 73%, and the initial viscosity of the positive electrode slurry is 8000 mPa·s to 35000 mPa·s.

In some embodiments, the solid content of the positive electrode slurry is 63% to 73%, and the initial viscosity of the positive electrode slurry is 8000 mPa·s to 35000 mPa·s. In some embodiments, the initial viscosity of the positive electrode slurry is optionally any one of 8000 mPa.s, 9000 mPa.s, 10000 mPa.s, 11000 mPa.s, 12000 mPa.s, 13000 mPa.s, 14000 mPa.s, 15000 mPa.s, 16000 mPa.s, 17000 mPa.s, 18000 mPa.s, 19000 mPa.s, 20000 mPa.s, 22000 mPa.s, 23000 mPa.s, 24000 mPa.s, 25000 mPa.s, 26000 mPa.s, 27000 mPa.s, 28000 mPa.s, 29000 mPa.s, 30000 mPa.s, 30500 mPa.s, 31000 mPa.s, 32000 mPa.s, 33000 mPa.s, 34000 mPa.s, 35000 mPa·s.

The initial viscosity of the positive electrode slurry refers to the discharge viscosity of the positive electrode slurry, and the viscosity when the positive electrode slurry is prepared and discharged is recorded as the initial viscosity of the positive electrode slurry.

In the present application, the viscosity of the positive electrode slurry can be tested using methods known in the art, such as using a rotational viscometer to measure the viscosity of the slurry. A suitable rotor is selected, the viscometer rotor is fixed, and the slurry is placed under the viscometer rotor so that the slurry just submerges the scale line of the rotor. Instrument model: Shanghai Fangrui NDJ-5S, rotor: 63# (2000-10000 mPa.s ), 64# (10000-50000 mPa.s), rotational speed: 12 rpm, test temperature: 25°C, test time 5 min; the data is read when the display is stable.

The initial viscosity of a positive electrode slurry with a solid content of 63% to 73% is 8000 mPa·s to 35000 mPa·s. The positive electrode slurry has good coatability and processability, which widens the coating process window.

In some embodiments, the solvent used in the second stirring and the solvent used in the fourth stirring are the same, and based on the total mass of the conductive agent, the positive electrode active material, the first binder, and the second binder, the mass content of the solvent used in the second stirring is 35% to 40%, and the mass content of the solvent used in the fourth stirring is 5% to 10%.

In some embodiments, the mass content of the solvent used in the second stirring can be selected from 35%, 36%, 37%, 38%, 39% or 40%, and the mass content of the solvent used in the fourth stirring can be selected from 5%, 6%, 7%, 8%, 9% or 10%, based on the total mass of the conductive agent, the positive electrode active material, the first binder and the second binder.

In some embodiments, in the positive electrode slurry, the ratio of the mass of the positive electrode active material, the total mass of the first binder and the second binder, and the mass of the conductive agent is (82-95):(3-10):(2-8). In some embodiments, in the positive electrode slurry, the ratio of the mass of the positive electrode active material, the total mass of the first binder and the second binder, and the mass of the conductive agent is optionally any one of 95:3:2, 94:4:2, 93:5:2, 92:5:3, 91:6:3, 90:8:2, 90:5:5, 90:7:2, 88:8:4, 88:5:7, 82:10:8.

The positive electrode slurry within the above range not only has good processability, but also makes the formed positive electrode plate have excellent electrochemical performance.

In some embodiments, the positive electrode active material is one or more of lithium iron phosphate, lithium cobalt oxide, and lithium manganate.

The above-mentioned positive electrode active material enables the battery to have high energy density and is conducive to improving the cycling performance of the battery.

In some embodiments, the conductive agent is one or more of conductive carbon black, graphite, and carbon nanotubes.

The above-mentioned conductive agent is beneficial to improving the conductivity of the battery.

The present application provides a positive electrode slurry, which is prepared by the preparation method in any of embodiments of the present application.

In some embodiments, the solid content of the positive electrode slurry is 63% to 73%, the initial viscosity of the positive electrode slurry is 8000 mPa·s to 35000 mPa·s, and after standing for 24 h, the viscosity of the positive electrode slurry does not exceed 48000 mPa·s. In some embodiments, the initial viscosity of the positive electrode slurry is optionally any one of 8000 mPa.s, 9000 mPa.s, 10000 mPa.s, 11000 mPa.s, 12000 mPa.s, 13000 mPa.s, 14000 mPa.s, 15000 mPa.s, 16000 mPa.s, 17000 mPa.s, 18000 mPa.s, 19000 mPa.s, 20000 mPa.s, 22000 mPa.s, 23000 mPa.s, 24000 mPa.s, 25000 mPa.s, 26000 mPa.s, 27000 mPa.s, 28000 mPa.s, 29000 mPa.s, 30000 mPa.s, 30500 mPa.s, 31000 mPa.s, 32000 mPa.s, 33000 mPa.s, 34000 mPa.s, 35000 mPa·s. In some embodiments, after standing for 24 h, the initial viscosity of the positive eleccomtrode slurry is optionally any one of 8000 mPa.s, 9000 mPa.s, 10000 mPa.s, 11000 mPa.s, 12000 mPa.s, 13000 mPa.s, 14000 mPa.s, 15000 mPa.s, 16000 mPa.s, 17000 mPa.s, 18000 mPa.s, 19000 mPa.s, 20000 mPa.s, 22000 mPa.s, 23000 mPa.s, 24000 mPa.s, 25000 mPa.s, 26000 mPa.s, 27000 mPa.s, 28000 mPa.s, 29000 mPa.s, 30000 mPa.s, 30500 mPa.s, 31000 mPa.s, 32000 mPa.s, 33000 mPa.s, 34000 mPa.s, 36000 mPa.s, 38000 mPa.s, 40000 mPa.s, 42000 mPa.s, 44000 mPa.s, 48000 mPa.s.

The positive electrode slurry has suitable viscosity, excellent stability, and good processability.

### [Positive electrode plate]

The present application provides a positive electrode plate comprising a positive electrode current collector and a positive electrode film layer arranged on at least one surface of the positive electrode current collector, and the positive electrode film layer is prepared by the preparation method of any of embodiments of the present application. As an example, the positive electrode current collector has two surfaces opposite in its own thickness direction, and the positive electrode film layer is arranged on either one or both of the two opposite surfaces of the positive electrode current collector.

In some embodiments, the positive electrode current collector may be a metal foil or a composite current collector. For example, an aluminum foil can be used as the metal foil. The composite current collector may comprise a high molecular material substrate layer and a metal layer formed on at least one surface of the high molecular material substrate layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene (PP), polyethylene terephthalate (PET), polybutylene terephthalate (PBT), polystyrene (PS), or polyethylene (PE)).

In some embodiments, the positive electrode active material may be a positive electrode active material for batteries well known in the art. As an example, the positive electrode active material may include at least one of the following materials: a lithium-comprising phosphate of olivine structure, a lithium transition metal oxide, and a respective modified compound thereof. However, the present application is not limited to these materials, and other conventional materials useful as positive electrode active materials for batteries can also be used. These positive electrode active materials may be used alone or in combination of two or more thereof. Among them, examples of lithium transition metal oxides may include, but are not limited to, at least one of a lithium-cobalt oxide (such as LiCoO₂), a lithium-nickel oxide (such as LiNiO₂), a lithium-manganese oxide (such as LiMnO₂ or LiMn₂O₄), a lithium-nickel-cobalt oxide, a lithium-manganese-cobalt oxide, a lithium-nickel-manganese oxide, a lithium-nickel-cobalt-manganese oxide (such as LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁)), a lithium-nickel-cobalt-aluminum oxide (such as LiNi_{0.85}Co_{0.15}Al_{0.05}O₂), and a modified compound thereof. Examples of lithium-comprising phosphates of olivine structure may include, but are not limited to, at least one of lithium iron phosphate (e.g., LiFePO₄ (also abbreviated as LFP)), lithium iron phosphate-carbon composite, lithium manganese phosphate (e.g., LiMnPO₄), lithium manganese phosphate-carbon composite, lithium iron manganese phosphate, and lithium iron manganese phosphate-carbon composite.

In some embodiments, the binding force per unit length between the positive electrode film layer and the positive electrode current collector is greater than 20 N/m. In some embodiments, the binding force per unit length between the positive electrode film layer and the positive electrode current collector is optionally 20 N/m to 30 N/m. In some embodiments, the binding force per unit length between the positive electrode film layer and the positive electrode current collector is optionally any one of 20 N/m, 20.5 N/m, 21 N/m, 21.5 N/m, 22 N/m, 22.5 N/m, 23 N/m, 23.5 N/m, 24 N/m, 24.5 N/m, 25 N/m, 27 N/m, 30 N/m.

Herein, the binding force is mainly used to characterize the binding strength between the film layer prepared from the positive electrode slurry and the current collector in the positive electrode plate, which can be tested by any known method. As an example, the test of the binding force per unit length between the positive electrode film layer and the positive electrode current collector can be carried out by using the method known in the art. For example, referring to the GB-T2790-1995 national standard "Adhesives - 180° Peel Strength Test Method", the test process of binding force in the examples and comparative examples of the present application is as follows: a sample with a width of 30 mm and a length of 100-160 mm is cut by a blade, and a special double-sided adhesive tape is pasted on a steel plate, the adhesive tape has a width of 20 mm and a length of 90-150 mm. The coating surface of the electrode plate sample cut earlier is pasted on the double-sided adhesive tape, and then rolled three times in the same direction with a 2 kg press roll. A paper tape with the same width as the electrode plate and a length of 250 mm is fixed on the electrode plate current collector, and fixed with crepe adhesive. The power of the SUNS tensile machine (sensitivity, 1 N) is turned on, the indicator light is on, the position-limiting block is adjusted to the appropriate position, and the end of the steel plate that is not pasted with the electrode plate is fixed with the lower clamp. The paper tape is folded upward and fixed with the upper clamp. The position of the upper clamp is adjusted using the "up" and "down" buttons on the manual controller provided on the tensile machine. Then test is carried out and the value is read. The stretching speed is 50 mm/min. The force on the electrode plate under balanced force is divided by the width of the adhesive tape, which is used as the binding force of the electrode plate per unit length to characterize the binding strength between the positive electrode film layer and the current collector.

### [Negative electrode plate]

The negative electrode plate includes a negative-electrode current collector and a negative-electrode film layer arranged on at least one surface of the negative-electrode current collector, wherein the negative-electrode film layer includes a negative-electrode active material.

As an example, the negative electrode current collector has two surfaces opposite in its own thickness direction, and the negative electrode film layer is arranged on either one or both of the two opposite surfaces of the negative electrode current collector.

In some embodiments, the negative electrode current collector may be a metal foil or a composite current collector. For example, a copper foil can be used as the metal foil. The composite current collector may include a high molecular material substrate layer and a metal layer formed on at least one surface of the high molecular material substrate. The composite current collector can be formed by forming a metal material (copper, copper alloy, nickel, nickel alloy, titanium, titanium alloy, silver, and silver alloy, etc.) on a high molecular material substrate (e.g., polypropylene (PP), polyethylene terephthalate (PET), polybutylene terephthalate (PBT), polystyrene (PS), polyethylene (PE), etc.).

In some embodiments, a negative electrode active material for the battery well known in the art may be used as the negative electrode active material. As an example, the negative electrode active material may include at least one of the following materials: artificial graphite, natural graphite, soft carbon, hard carbon, silicon-based material, tin-based material, and lithium titanate, etc. The silicon-based material may be selected from at least one of elemental silicon, silicon-oxygen compound, silicon-carbon composite, silicon-nitrogen composite, and silicon alloy. The tin-based material may be selected from at least one of elemental tin, tin-oxygen compound, and tin alloy. However, the present application is not limited to these materials, and other conventional materials useful as negative electrode active materials for batteries can also be used. These negative electrode active materials may be used alone or in a combination of two or more thereof.

In some embodiments, the negative electrode film layer further optionally comprises a binder. The binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally comprises a conductive agent. The conductive agent may be selected from at least one of superconducting carbon, acetylene black, carbon black, Ketjen black, carbon dot, carbon nanotube, graphene, and carbon nanofiber.

In some embodiments, the negative electrode film layer further optionally comprises other adjuvants, for example, a thickener (such as sodium carboxymethyl cellulose (CMC-Na)).

In some embodiments, the negative electrode plate can be prepared by dispersing the components for preparing the negative electrode plate, for example, the negative electrode active material, the conductive agent, the binder and any other components in a solvent (for example, deionized water) to form a negative electrode slurry; and coating the negative electrode slurry on a negative electrode current collector, followed by oven drying, cold pressing and other procedures, to obtain the negative electrode plate.

### [Electrolyte]

The electrolyte serves to conduct ions between the positive electrode plate and the negative electrode plate. The type of the electrolyte is not particularly limited in the present application, and can be selected according to requirements. For example, the electrolyte may be in a liquid state, a gelation state, or an all-solid state.

In some embodiments, the electrolyte is an electrolyte solution. The electrolyte solution comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate , lithium bis(oxalato)borate, lithium difluoro bis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte solution may further optionally include an additive. For example, the additive may include a negative electrode film-forming additive, positive electrode film-forming additive, and may also include additives that can improve certain battery properties, such as additives that improve battery overcharge performance, additives that improve battery high or low temperature performance, and the like.

### [Separator]

In some embodiments, the secondary battery further comprises a separator. The type of the separator is not particularly limited in the present application, and any well-known separator having good chemical stability, mechanical stability, and a porous structure may be selected.

In some embodiments, the material of the separator can be selected from at least one of glass fiber, non-woven cloth, polyethylene, polypropylene, and polyvinylidene fluoride. The separator may be a single-layer film or a multi-layer composite film, and is not particularly limited. When the separator is a multilayer composite film, the material in each layer may be same or different, which is not particularly limited.

In some embodiments, the positive electrode plate, the negative electrode plate, and the separator may be made into an electrode assembly by a winding process or a stacking process.

In some embodiments, the secondary battery may comprise an outer package. The outer package can be used to encapsulate the above electrode assembly and the above electrolyte.

In some embodiments, the outer package of the secondary battery may be a hard case, such as a hard plastic case, an aluminum case, a steel case, and the like. The outer package of the secondary battery may also be a soft pack, such as a bag-type soft pack. The material of the soft pack may be a plastic, and examples of the plastic may include polypropylene, polybutylene terephthalate, polybutylene succinate, and the like.

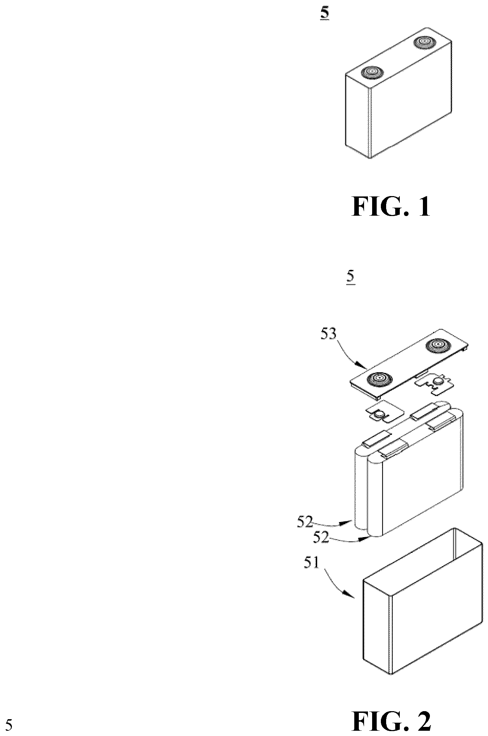

The shape of the secondary battery is not particularly limited in the present application, and may be a cylinder, a square, or any other shape. For example, Fig. 1 shows a secondary battery 5 with a square structure as an example.

In some embodiments, referring to Fig. 2, the outer package may comprise a case 51 and a cover plate 53. Here, the case 51 can include a bottom plate and a side plate connected to the bottom plate, with the bottom plate and the side plate enclosing to form an accommodating cavity. The case 51 has an opening in communication with the accommodating cavity, and the cover plate 53 can cover the opening to close the accommodating cavity. The positive electrode plate, the negative electrode plate, and the separator may be formed into an electrode assembly 52 by a winding process or a stacking process. The electrode assembly 52 is encapsulated within the accommodating cavity. The electrolyte solution impregnates the electrode assembly 52. The number of electrode assemblies 52 comprised in the secondary battery 5 may be one or more, and may be selected by those skilled in the art according to specific actual requirements.

In some embodiments, the secondary batteries may be assembled into a battery module, the number of secondary batteries comprised in the battery module may be one or more, and the specific number may be selected by those skilled in the art according to the present application and capacity of the battery module.

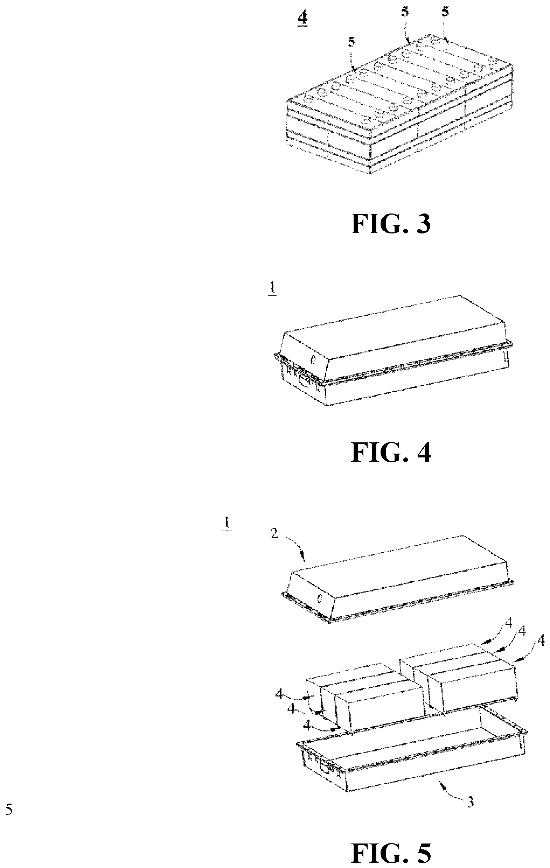

Fig. 3 shows a battery module 4 as an example. Referring to Fig. 3, in the battery module 4, a plurality of secondary batteries 5 can be sequentially arranged along a length direction of the battery module 4. Of course, any other arrangements are also possible. The plurality of secondary batteries 5 may further be fixed by fasteners.

Optionally, the battery module 4 may further include a shell having an accommodating space, in which the plurality of secondary batteries 5 is accommodated.

In some embodiments, the above battery modules may be further assembled into a battery pack, the number of battery modules comprised in the battery pack may be one or more, and the specific number may be selected by those skilled in the art based on the present application and capacity of the battery pack.

Figs. 4 and 5 show a battery pack 1 as an example. Referring to Figs. 4 and 5, the battery pack 1 may comprise a battery box and a plurality of battery modules 4 provided in the battery box. The battery box comprises an upper box 2 and a lower box 3, where the upper box 2 can cover the lower box 3 and forms an enclosed space for accommodating the battery module 4. The plurality of battery modules 4 may be arranged in the battery box in any manner.

In addition, the present application further provides an electrical apparatus comprising at least one of the secondary battery, the battery module, or the battery pack provided in the present application. The secondary battery, the battery module, or the battery pack can be used as a power source for the electrical apparatus, and can also be used as an energy storage unit for the electrical apparatus. The electrical apparatus may include a mobile device (e.g., a mobile phone, a laptop, etc.), an electric vehicle (e.g., all-electric vehicle, a hybrid electric vehicle, a plug-in hybrid electric vehicle, an electric bicycle, an electric scooter, an electric golf cart, an electric truck, etc.), an electric train, a ship and a satellite, and an energy storage system, etc., but is not limited thereto.

For the electrical apparatus, the secondary battery, the battery module, or the battery pack can be selected according to its use requirements.

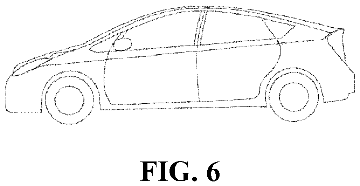

Fig. 6 is an example of an electrical apparatus. The electrical apparatus is an all-electric vehicle, a hybrid electric vehicle, a plug-in hybrid electric vehicle, or the like. In order to meet the requirements of the electrical apparatus for high power and high energy density of a secondary battery, a battery pack or a battery module may be used.

As another example, the apparatus may be a mobile phone, a tablet, a laptop, etc. The apparatus is generally required to be light and thin, and may use a secondary battery as a power source.

### Examples

Examples of the present application will be described below. The examples described below are exemplary and only used to explain the present application, and are not to be construed as limiting the present application. Where specific techniques or conditions are not specified in the examples, the techniques or conditions described in the literature of the art or the product specifications are followed. Where manufacturers are not specified, the reagents or instruments used are conventional products and are commercially available.

### I. Preparation method

### Example 1

### 1) Preparation of positive electrode slurry

Weighing the raw materials: The raw materials are weighed according to the formula of the positive electrode slurry. The mass ratio of the positive electrode active material : the first binder : the second binder : the conductive agent is 95:1.5:1.5:2, wherein the mass of the positive electrode active material is 1200 kg, the positive electrode active material is lithium iron phosphate, the first binder is polyvinylidene fluoride with a weight average molecular weight of 2 million, the second binder is polyvinylidene fluoride with a weight average molecular weight of 1 million, and the conductive agent is conductive carbon black;
First stirring: Lithium iron phosphate, conductive carbon black and the first binder are mixed and stirred sufficiently, the revolution velocity is 15 rpm, the rotation velocity is 0, the stirring time is 15 min, and a dry mixture is obtained;
Second stirring: The second binder and N-methyl pyrrolidone (NMP) solvent are mixed and stirred sufficiently. The mass of the NMP solvent added in the second stirring is 35% of the total mass of the positive electrode active material, the first binder, the second binder and the conductive agent, the revolution velocity is 25 rpm, the rotation velocity is 1200 rpm, the stirring time is 60 min, and an adhesive solution is obtained;
Third stirring: The above dry mixture is added to the above adhesive solution, stirred sufficiently, the revolution velocity is 25 rpm, the rotation velocity is 600 rpm, the mixing time is 60 min, and a primary slurry is obtained;
Fourth stirring: The NMP solvent is added to the above-mentioned primary slurry, wherein the mass of the NMP solvent added in the fourth stirring is 10% of the total mass of the positive electrode active material, the first binder, the second binder and the conductive agent, the revolution velocity is 25 rpm, the rotation velocity is 1200 rpm, the stirring time is 110 min, and a positive electrode slurry with a solid content of 68%±5% is obtained.

### 2) Preparation of electrode plate

The positive electrode current collector aluminum foil is evenly coated with the positive electrode slurry prepared in Example 1, and then a positive electrode plate is obtained after oven drying, cold pressing and slitting.

### Examples 2 to 3

The preparation method is basically the same as in Example 1, except that the first binder in the first stirring is adjusted to polyvinylidene fluoride with a weight average molecular weight of 4 million and polyvinylidene fluoride with a weight average molecular weight of 8 million respectively. The specific parameters are shown in Table 1.

### Examples 4 to 8

The preparation method is basically the same as in Example 3, except that the second binder in the second stirring is adjusted to polyvinylidene fluoride with a weight average molecular weight of 4 million, polyvinylidene fluoride with a weight average molecular weight of 3 million, polyvinylidene fluoride with a weight average molecular weight of 2 million, polyvinylidene fluoride with a weight average molecular weight of 1.5 million, and polyvinylidene fluoride with a weight average molecular weight of 0.5 million respectively. See Table 1 for specific parameters.

### Examples 9 to 12

The preparation method is basically the same as in Example 3, except that the mass ratio of the first binder to the second binder is adjusted. See Table 1 for specific parameters.

### Examples 13 to 16

The preparation method is basically the same as in Example 1, except that the first binder is adjusted to a composition. Taking Example 13 as an example, the first binder is a composition of polyvinylidene fluoride with a weight average molecular weight of 2 million and polyvinylidene fluoride with a weight average molecular weight of 4 million, wherein in the first binder, the polyvinylidene fluoride with a weight average molecular weight of 2 million accounts for 30% of the total amount of the binder and the polyvinylidene fluoride with a weight average molecular weight of 4 million accounts for 40% of the total amount of the binder, and in the second binder, the polyvinylidene fluoride with a weight average molecular weight of 1 million accounts for 30% of the total amount of the binder. See Table 1 for specific parameters in other examples.

### Examples 17 to 44

The preparation method is basically the same as in Example 3, except that the stirring parameters of the first stirring and the second stirring are adjusted. See Table 1 for specific parameters.

### Comparative Example 1

Weighing the raw materials: The raw materials are weighed according to the formula of the positive electrode slurry. The mass ratio of the positive electrode active material : the binder : the conductive agent is 95:3:2, wherein the mass of the positive electrode active material is 1200 kg, the positive electrode active material is lithium iron phosphate, the binder is polyvinylidene fluoride with a weight average molecular weight of 2 million, and the conductive agent is conductive carbon black;
First stirring: Lithium iron phosphate and conductive carbon black are mixed and stirred sufficiently, the revolution velocity is 15 rpm, the rotation velocity is 0, the stirring time is 15 min, and a dry mixture is obtained;
Second stirring: The binder and NMP solvent are mixed and stirred sufficiently. The mass of the solvent added is 35% of the total mass of the positive electrode active material, the binder, and the conductive agent, the revolution velocity is 25 rpm, the rotation velocity is 1200 rpm, the stirring time is 60 min, and an adhesive solution is obtained;
Third stirring: The dry mixture prepared in the first mixing is added to the adhesive solution prepared in the second stirring, stirred sufficiently, the revolution velocity is 25 rpm, the rotation velocity is 600 rpm, the mixing time is 60 min, and a primary slurry is obtained;
Fourth stirring: The NMP solvent is added to the primary slurry, the mass of the solvent added is 10% of the total mass of the positive electrode active material, the binder and the conductive agent, the revolution velocity is 25 rpm, the rotation velocity is 1200 rpm, the stirring time is 110 min, and a positive electrode slurry with a solid content of 68%±5% is obtained.

### Comparative Examples 2-8

They are basically the same as Comparative Example 1, except that the weight average molecular weight of the binder is modulated. For specific parameters, see Table 1.

### II. Test methods:

### 1. Weight average molecular weight

A Waters 2695 Isocratic HPLC gel chromatograph (differential refraction detector 2141) is used. A polystyrene solution sample with a mass fraction of 3.0% is used as a reference, and a matching chromatographic column (oily: Styragel HT5DMF7.8×300 mm+Styragel HT4) is selected. A 3.0% polymer solution is prepared using purified N-methyl pyrrolidone (NMP) solvent, and the prepared solution is allowed to stand for one day for later use. When testing, tetrahydrofuran is first drawn in with a syringe for rinsing, which is repeated several times. Then 5 ml of the test solution is drawn in, the air in the syringe is removed, and the needle tip is wiped dry. Finally, the sample solution is slowly injected into the injection port. After the display is stable, the data is obtained and the weight average molecular weight is read.

### 2. Slurry viscosity test

The viscosity of the slurry is measured using a rotational viscometer. A suitable rotor is selected, the viscometer rotor is fixed, and the slurry is placed under the viscometer rotor so that the slurry just submerges the scale line of the rotor. Instrument model: Shanghai Fangrui NDJ-5S, rotor: 63# (2000-10000 mPa.s ), 64# (10000-50000 mPa.s), rotational speed: 12 rpm, test temperature: 25°C, test time 5 min; the data is read when the display is stable.

### 3. Test of viscosity of the slurry after standing for 24 h

The viscosity of the slurry is re-tested after standing for 24 h, and the viscosity of the slurry is measured using a rotational viscometer. A suitable rotor is selected, the viscometer rotor is fixed, and the slurry is placed under the viscometer rotor so that the slurry just submerges the scale line of the rotor. Instrument model: Shanghai Fangrui NDJ-5S, rotor: 63# (2000-10000 mPa.s ), 64# (10000-50000 mPa.s), rotational speed: 12 rpm, test temperature: 25°C, test time 5 min; the data is read when the display is stable.

### 4. Test of gelation state of the slurry after standing for 24 h

After the slurry has rested for 24 h, a steel ruler is used to pick up the slurry in the beaker, and judge the gelation state of the slurry based on the flow state of the slurry.

The gelation-free state means that the slurry flows naturally and continuously, and the slurry flows evenly on the surface of the steel ruler without lumps;

In the slight gelation state, the slurry flows naturally and continuously, but the fluid is relatively fine, and the slurry is basically spread evenly on the surface of the steel ruler, with small lumps;

In the moderate gelation state, the slurry drips naturally and intermittently; it flows discontinuously, and the slurry cannot be spread evenly on the surface of the steel ruler, and there are obvious lumpy agglomerations;

In the severe gelation state, the slurry cannot flow down in a stream, forms into lumps and falls off, or remains directly on the steel ruler and cannot flow down.

### 5. Filtration performance test

A 500 ml beaker is taken and placed at the lower end of the 200-mesh filter screen holder. 500 ml of conductive slurry is taken, and placed in the filter screen for filtering. The time when the volume of the slurry in the beaker reaches 300 ml is recorded, and time is recorded.

### 6. Test of binding force of electrode plate

Referring to the GB-T2790-1995 national standard "Adhesives - 180° Peel Strength Test Method", the test process of binding force in the examples and comparative examples of the present application is as follows: a sample with a width of 30 mm and a length of 100-160 mm is cut by a blade, and a special double-sided adhesive tape is pasted on a steel plate, the adhesive tape has a width of 20 mm and a length of 90-150 mm. The coating surface of the electrode plate sample cut earlier is pasted on the double-sided adhesive tape, and then rolled three times in the same direction with a 2 kg press roll. A paper tape with the same width as the electrode plate and a length of 250 mm is fixed on the electrode plate current collector, and fixed with crepe adhesive. The power of the SUNS tensile machine (sensitivity, 1 N) is turned on, the indicator light is on, the position-limiting block is adjusted to the appropriate position, and the end of the steel plate that is not pasted with the electrode plate is fixed with the lower clamp. The paper tape is folded upward and fixed with the upper clamp. The position of the upper clamp is adjusted using the "up" and "down" buttons on the manual controller provided on the tensile machine. Then test is carried out and the value is read. The stretching speed is 50 mm/min. The force on the electrode plate under balanced force is divided by the width of the adhesive tape, which is used as the binding force of the electrode plate per unit length to characterize the binding strength between the positive electrode film layer and the current collector.

### III. Analysis on test results of each example and comparative example

The examples and comparative examples were each prepared according to the above method, and measured for various performance parameters. The results are shown in Table 1 and Table 2 below.

**Table 1 Preparation parameters of examples and comparative examples**

| No. | First binder | | | | | | Second binder | | First stirring | | Second stirring | | | Third stirring | Fourth stirring |
|---|---|---|---|---|---|---|---|---|---|---|---|---|---|---|---|
| | Weight average molecular weight/ten thousand | Mass content/ % | Weight average molecular weight/ten thousand | Mass content/ % | Weight average molecular weight/ten thousand | Mass content/ % | Weight average molecular weight/ten thousand | Mass content/ % | Revolution velocity/rp m | Stirring time/ min | Revolution velocity/rp m | Rotation velocity/rp m | Stirring time/ min | Rotation velocity /rpm | Rotation velocity /rpm |
| Example 1 | 200 | 50% | / | / | / | / | 100 | 50% | 15 | 15 | 25 | 1200 | 60 | 600 | 1200 |
| Example 2 | / | / | 400 | 50% | / | / | 100 | 50% | 15 | 15 | 25 | 1200 | 60 | 600 | 1200 |
| Example 3 | / | / | / | / | 800 | 50% | 100 | 50% | 15 | 15 | 25 | 1200 | 60 | 600 | 1200 |
| Example 4 | / | / | / | / | 800 | 50% | 400 | 50% | 15 | 15 | 25 | 1200 | 60 | 600 | 1200 |
| Example 5 | / | / | / | / | 800 | 50% | 300 | 50% | 15 | 15 | 25 | 1200 | 60 | 600 | 1200 |
| Example 6 | / | / | / | / | 800 | 50% | 200 | 50% | 15 | 15 | 25 | 1200 | 60 | 600 | 1200 |
| Example 7 | / | / | / | / | 800 | 50% | 150 | 50% | 15 | 15 | 25 | 1200 | 60 | 600 | 1200 |
| Example 8 | / | / | / | / | 800 | 50% | 50 | 50% | 15 | 15 | 25 | 1200 | 60 | 600 | 1200 |
| Example 9 | / | / | / | / | 800 | 80% | 100 | 20% | 15 | 15 | 25 | 1200 | 60 | 600 | 1200 |
| Example 10 | / | / | / | / | 800 | 70% | 100 | 30% | 15 | 15 | 25 | 1200 | 60 | 600 | 1200 |
| Example 11 | / | / | / | / | 800 | 60% | 100 | 40% | 15 | 15 | 25 | 1200 | 60 | 600 | 1200 |
| Example 12 | / | / | / | / | 800 | 40% | 100 | 60% | 15 | 15 | 25 | 1200 | 60 | 600 | 1200 |
| Example 13 | 200 | 30% | 400 | 40% | / | / | 100 | 30% | 15 | 15 | 25 | 1200 | 60 | 600 | 1200 |
| Example 14 | 200 | 30% | / | / | 800 | 40% | 100 | 30% | 15 | 15 | 25 | 1200 | 60 | 600 | 1200 |
| Example 15 | / | / | 400 | 30% | 800 | 40% | 100 | 30% | 15 | 15 | 25 | 1200 | 60 | 600 | 1200 |
| Example 16 | 200 | 30% | 400 | 20% | 800 | 20% | 100 | 30% | 15 | 15 | 25 | 1200 | 60 | 600 | 1200 |
| Example 17 | / | / | / | / | 800 | 50% | 100 | 50% | 5 | 15 | 25 | 1200 | 60 | 600 | 1200 |
| Example 18 | / | / | / | / | 800 | 50% | 100 | 50% | 10 | 15 | 25 | 1200 | 60 | 600 | 1200 |
| Example 19 | / | / | / | / | 800 | 50% | 100 | 50% | 20 | 15 | 25 | 1200 | 60 | 600 | 1200 |
| Example 20 | / | / | / | / | 800 | 50% | 100 | 50% | 25 | 15 | 25 | 1200 | 60 | 600 | 1200 |
| Example 21 | / | / | / | / | 800 | 50% | 100 | 50% | 15 | 5 | 25 | 1200 | 60 | 600 | 1200 |
| Example 22 | / | / | / | / | 800 | 50% | 100 | 50% | 15 | 10 | 25 | 1200 | 60 | 600 | 1200 |
| Example 23 | / | / | / | / | 800 | 50% | 100 | 50% | 15 | 25 | 25 | 1200 | 60 | 600 | 1200 |
| Example 24 | / | / | / | / | 800 | 50% | 100 | 50% | 15 | 35 | 25 | 1200 | 60 | 600 | 1200 |
| Example 25 | / | / | / | / | 800 | 50% | 100 | 50% | 15 | 15 | 10 | 1200 | 60 | 600 | 1200 |
| Example 26 | / | / | / | / | 800 | 50% | 100 | 50% | 15 | 15 | 20 | 1200 | 60 | 600 | 1200 |
| Example 27 | / | / | / | / | 800 | 50% | 100 | 50% | 15 | 15 | 30 | 1200 | 60 | 600 | 1200 |
| Example 28 | / | / | / | / | 800 | 50% | 100 | 50% | 15 | 15 | 35 | 1200 | 60 | 600 | 1200 |
| Example 29 | / | / | / | / | 800 | 50% | 100 | 50% | 15 | 15 | 25 | 900 | 60 | 600 | 1200 |
| Example 30 | / | / | / | / | 800 | 50% | 100 | 50% | 15 | 15 | 25 | 1000 | 60 | 600 | 1200 |
| Example 31 | / | / | / | / | 800 | 50% | 100 | 50% | 15 | 15 | 25 | 1400 | 60 | 600 | 1200 |
| Example 32 | / | / | / | / | 800 | 50% | 100 | 50% | 15 | 15 | 25 | 1500 | 60 | 600 | 1200 |
| Example 33 | / | / | / | / | 800 | 50% | 100 | 50% | 15 | 15 | 25 | 1200 | 50 | 600 | 1200 |
| Example 34 | / | / | / | / | 800 | 50% | 100 | 50% | 15 | 15 | 25 | 1200 | 70 | 600 | 1200 |
| Example 35 | / | / | / | / | 800 | 50% | 100 | 50% | 15 | 15 | 25 | 1200 | 90 | 600 | 1200 |
| Example 36 | / | / | / | / | 800 | 50% | 100 | 50% | 15 | 15 | 25 | 1200 | 100 | 600 | 1200 |
| Example 37 | / | / | / | / | 800 | 50% | 100 | 50% | 15 | 15 | 25 | 1200 | 60 | 400 | 1200 |
| Example 38 | / | / | / | / | 800 | 50% | 100 | 50% | 15 | 15 | 25 | 1200 | 60 | 500 | 1200 |
| Example 39 | / | / | / | / | 800 | 50% | 100 | 50% | 15 | 15 | 25 | 1200 | 60 | 800 | 1200 |
| Example 40 | / | / | / | / | 800 | 50% | 100 | 50% | 15 | 15 | 25 | 1200 | 60 | 1000 | 1200 |
| Example 41 | / | / | / | / | 800 | 50% | 100 | 50% | 15 | 15 | 25 | 1200 | 60 | 600 | 600 |
| Example 42 | / | / | / | / | 800 | 50% | 100 | 50% | 15 | 15 | 25 | 1200 | 60 | 600 | 1000 |
| Example 43 | / | / | / | / | 800 | 50% | 100 | 50% | 15 | 15 | 25 | 1200 | 60 | 600 | 1400 |
| Example 44 | / | / | / | / | 800 | 50% | 100 | 50% | 15 | 15 | 25 | 1200 | 60 | 600 | 1500 |
| Comparative Example 1 | 200 | 100% | / | / | / | / | / | / | 15 | 15 | 25 | 1200 | 60 | 600 | 1200 |
| Comparative Example 2 | / | / | 400 | 100% | / | / | / | / | 15 | 15 | 25 | 1200 | 60 | 600 | 1200 |
| Comparative Example 3 | / | / | / | / | 800 | 100% | / | / | 15 | 15 | 25 | 1200 | 60 | 600 | 1200 |
| Comparative Example 4 | 200 | 50% | / | / | / | / | 100 | 50% | 15 | 15 | 25 | 1200 | 60 | 600 | 1200 |
| Comparative Example 5 | / | / | 400 | 50% | / | / | 100 | 50% | 15 | 15 | 25 | 1200 | 60 | 600 | 1200 |
| Comparative Example 6 | / | / | / | / | 800 | 50% | 100 | 50% | 15 | 15 | 25 | 1200 | 60 | 600 | 1200 |
| Comparative Example 7 | 200 | 30% | / | / | 800 | 40% | 100 | 30% | 15 | 15 | 25 | 1200 | 60 | 600 | 1200 |
| Comparative Example 8 | 200 | 30% | 400 | 20% | 800 | 20% | 100 | 30% | 15 | 15 | 25 | 1200 | 60 | 600 | 1200 |

**Table 2 Test results of parameters of examples and comparative examples**

| No. | Slurry | | | | Positive electrode plate |
|---|---|---|---|---|---|
| | Viscosity/mPa·s | 24h viscosity/mPa·s | 24h gelation state | Filtrability/s | Binding force/(N/m) |
| Example 1 | 12000 | 25000 | No gelation | 87 | 21.94 |
| Example 2 | 17000 | 28000 | No gelation | 93 | 22.31 |
| Example 3 | 23000 | 31000 | Slight gelation | 129 | 24.68 |
| Example 4 | 35000 | 48000 | Moderate gelation | 220 | 23.74 |
| Example 5 | 31000 | 42000 | Moderate gelation | 195 | 22.58 |
| Example 6 | 27000 | 38000 | Slight gelation | 156 | 23.41 |
| Example 7 | 20000 | 31000 | No gelation | 123 | 23.12 |
| Example 8 | 9800 | 26000 | No gelation | 52 | 22.34 |
| Example 9 | 45000 | / | Severe gelation | 291 | 15.87 |
| Example 10 | 34000 | 48000 | Moderate gelation | 213 | 22.13 |
| Example 11 | 31000 | 43000 | Moderate gelation | 182 | 23.86 |
| Example 12 | 28000 | 39000 | Slight gelation | 124 | 23.92 |
| Example 13 | 28000 | 39000 | Slight gelation | 137 | 22.35 |
| Example 14 | 31000 | 47000 | Moderate gelation | 191 | 23.19 |
| Example 15 | 34000 | 48000 | Moderate gelation | 214 | 22.86 |
| Example 16 | 18000 | 31000 | Slight gelation | 141 | 22.95 |
| Example 17 | 39000 | / | Severe gelation | 380 | 14.96 |
| Example 18 | 34000 | 48000 | Severe gelation | 316 | 20.13 |
| Example 19 | 11000 | 24000 | No gelation | 66 | 23.94 |
| Example 20 | 10000 | 24000 | No gelation | 59 | 23.19 |
| Example 21 | 38000 | / | Severe gelation | 316 | 16.93 |
| Example 22 | 28000 | 43000 | Moderate gelation | 173 | 23.12 |
| Example 23 | 11000 | 25000 | No gelation | 61 | 23.52 |
| Example 24 | 9000 | 19000 | No gelation | 56 | 22.93 |
| Example 25 | 37000 | / | Severe gelation | 296 | 18.73 |
| Example 26 | 25500 | 39000 | Slight gelation | 101 | 23.49 |
| Example 27 | 12000 | 29000 | No gelation | 53 | 24.19 |
| Example 28 | 9000 | 26000 | No gelation | 60 | 23.95 |
| Example 29 | 43000 | / | Severe gelation | 296 | 12.49 |
| Example 30 | 26000 | 35000 | Slight gelation | 135 | 23.46 |
| Example 31 | 19000 | 31000 | Slight gelation | 110 | 23.31 |
| Example 32 | 17000 | 33000 | Moderate gelation | 120 | 22.31 |
| Example 33 | 36000 | / | Severe gelation | 265 | 15.49 |
| Example 34 | 22000 | 31000 | Slight gelation | 121 | 22.37 |
| Example 35 | 18000 | 26000 | Slight gelation | 96 | 23.18 |
| Example 36 | 17000 | 26000 | Slight gelation | 91 | 22.87 |
| Example 37 | 36000 | 49000 | Severe gelation | 196 | 14.58 |
| Example 38 | 29000 | 42000 | Moderate gelation | 134 | 21.45 |
| Example 39 | 19000 | 31000 | Slight gelation | 97 | 22.35 |
| Example 40 | 17000 | 29000 | Slight gelation | 92 | 22.64 |
| Example 41 | 38000 | / | Severe gelation | 301 | 14.94 |
| Example 42 | 28000 | 41000 | Moderate gelation | 132 | 22.46 |
| Example 43 | 17000 | 28000 | Slight gelation | 77 | 23.19 |
| Example 44 | 16000 | 28000 | Slight gelation | 54 | 22.94 |
| Comparative Example 1 | 27000 | 39000 | Slight gelation | 118 | 21.49 |
| Comparative Example 2 | 38000 | / | Severe gelation | 276 | 19.78 |
| Comparative Example 3 | 46000 | / | Severe gelation | 341 | 17.64 |
| Comparative Example 4 | 33000 | 48000 | Severe gelation | 238 | 22.48 |
| Comparative Example 5 | 37000 | / | Severe gelation | 316 | 15.42 |
| Comparative Example 6 | 44000 | / | Severe gelation | 325 | 14.32 |
| Comparative Example 7 | 38000 | / | Severe gelation | 285 | 13.58 |
| Comparative Example 8 | 35000 | / | Severe gelation | 258 | 14.29 |

As can be seen from the above-mentioned results, the positive electrode slurries in Examples 1 to 44 are all prepared by the slurry preparation methods disclosed in the present application, all of which include a first stirring, a second stirring, a third stirring and a fourth stirring; in the first stirring, the positive electrode active material lithium iron phosphate, the conductive agent conductive carbon black and the first binder polyvinylidene fluoride are mixed to prepare the dry mixture; in the second stirring, the second binder polyvinylidene fluoride and the NMP solvent are mixed and stirred to prepare an adhesive solution; in the third stirring, the dry mixture and the adhesive solution are mixed and stirred to prepare a primary slurry; in the fourth stirring, the NMP solvent and the primary slurry are mixed and stirred to prepare a positive electrode slurry; wherein the weight average molecular weight of polyvinylidene fluoride in the second binder is smaller than the weight average molecular weight of any polyvinylidene fluoride in the first binder. From the comparison between Examples 1 to 44 and Comparative Examples 1 to 8, it can be seen that the preparation method of a positive electrode slurry provided in the present application can effectively reduce the viscosity of the positive electrode slurry and improve the processability of the slurry. This preparation method is not only suitable for polymers in the prior art, but is especially suitable for large molecular weight polymers, and has wide versatility.

As can be seen from the comparison between Examples 3 to 8 and Comparative Example 6, controlling the second binder to be polyvinylidene fluoride with a weight average molecular weight of no more than 4 million can effectively reduce the discharge viscosity and viscosity after standing for 24 h of the positive electrode slurry, slow down the gelation of the positive electrode slurry, improve the filtration performance of the positive electrode slurry, and enhance the binding performance of the positive electrode plate. As can be seen from the comparison between Examples 3, 6 to 8 and Example 6, controlling the second binder to be polyvinylidene fluoride with a weight average molecular weight of no more than 2 million can further reduce the discharge viscosity and viscosity after standing for 24 h of the positive electrode slurry, and slow down the gelation of the positive electrode slurry and improve the filtration performance of the positive electrode slurry to a greater extent. As can be seen from the comparison between Examples 3, 7 to 8 and Example 6, controlling the second binder to be polyvinylidene fluoride with a weight average molecular weight of no more than 1.5 million can still further reduce the discharge viscosity and viscosity after standing for 24 h of the positive electrode slurry, and greatly slow down the gelation of the positive electrode slurry and improve the filtration performance of the positive electrode slurry.

From the comparison between Examples 1 to 16 and Comparative Examples 1 to 8, it can be seen that this preparation method is suitable for cases where the first binder comprises polyvinylidene fluoride with one or more weight average molecular weights, and is especially suitable for cases where the first binder comprises polyvinylidene fluoride with a weight average molecular weights of no less than 2 million.

As can be seen from the comparison between Example 3, Examples 10 to 11, Example 9 and Example 12, based on the total mass of the first binder and the second binder, the mass content of the second binder is controlled to be 30% to 50%, which can not only give full play to the strong binding performance of the high molecular weight polymer in the first binder and improve the binding performance of the positive electrode plate, but also ensure the processability of the positive electrode slurry, ensuring that it has low discharge viscosity, viscosity after standing for 24 h, and excellent anti-gelation and filtration properties.

From the comparison between Example 3, Examples 18 to 19 and Example 17, it can be seen that controlling the revolution velocity of the first stirring to be 10 rpm to 20 rpm can effectively reduce the discharge viscosity and viscosity after standing for 24 h of the positive electrode slurry, improve the filtration performance of the positive electrode slurry and enhance the binding performance of the positive electrode plate; from the comparison between Example 3, Examples 18 to 19 and Example 20, it can be seen that controlling the revolution velocity of the first stirring to be 10 rpm - 20 rpm can reduce production costs while ensuring the binding performance and filtration performance of the positive electrode slurry and the binding performance of the positive electrode plate.

From the comparison between Example 3, Examples 22 to 23 and Example 21, it can be seen that controlling the stirring time of the first stirring to be 10-25 min can effectively reduce the discharge viscosity and viscosity after standing for 24 h of the positive electrode slurry, slow down the gelation of the positive electrode slurry, improve the filtration performance of the positive electrode slurry and enhance the binding performance of the positive electrode plate; from the comparison between Example 3, Examples 22 to 23 and Example 24, it can be seen that controlling the stirring time of the first stirring to be 10-25 min can increase production efficiency and production costs while ensuring the binding performance and filtration performance of the positive electrode slurry and the binding performance of the positive electrode plate.

From the comparison between Example 3, Examples 26 to 27 and Example 25, it can be seen that controlling the revolution velocity of the second stirring to be 20 rpm to 30 rpm can effectively reduce the discharge viscosity and viscosity after standing for 24 h of the positive electrode slurry, slow down the gelation of the positive electrode slurry, improve the filtration performance of the positive electrode slurry and enhance the binding performance of the positive electrode plate; from the comparison between Example 3, Examples 26 to 27 and Example 28, it can be seen that controlling the revolution velocity of the second stirring to be 20 rpm to 30 rpm can reduce production costs while ensuring the binding performance and filtration performance of the positive electrode slurry and the binding performance of the positive electrode plate.

From the comparison between Example 3, Examples 30 to 31 and Example 29, it can be seen that controlling the rotation velocity of the second stirring to be 1000 rpm to 1400 rpm can effectively reduce the discharge viscosity and viscosity after standing for 24 h of the positive electrode slurry, slow down the gelation of the positive electrode slurry, improve the filtration performance of the positive electrode slurry and enhance the binding performance of the positive electrode plate; from the comparison between Example 3, Examples 30 to 31 and Example 32, it can be seen that controlling the rotation velocity of the second stirring to be 1000 rpm to 1400 rpm can slow down the positive electrode slurry and reduce production costs while ensuring the binding performance and filtration performance of the positive electrode slurry and the binding performance of the positive electrode plate.

From the comparison between Example 3, Examples 34 to 35 and Example 33, it can be seen that controlling the stirring time of the second stirring to be 60-90 min can effectively reduce the discharge viscosity and viscosity after standing for 24 h of the positive electrode slurry, slow down the gelation of the positive electrode slurry, improve the filtration performance of the positive electrode slurry and enhance the binding performance of the positive electrode plate; from the comparison between Example 3, Examples 34 to 35 and Example 36, it can be seen that controlling the stirring time of the second stirring to be 60-90 min can increase production efficiency and reduce production costs while ensuring the binding performance and filtration performance of the positive electrode slurry and the binding performance of the positive electrode plate.

From the comparison between Example 3, Examples 38 to 39 and Example 37, it can be seen that controlling the rotation velocity of the third stirring to be 500 rpm to 800 rpm can effectively reduce the discharge viscosity and viscosity after standing for 24 h of the positive electrode slurry, slow down the gelation of the positive electrode slurry, improve the filtration performance of the positive electrode slurry and enhance the binding performance of the positive electrode plate; from the comparison between Example 3, Examples 38 to 39 and Example 40, it can be seen that controlling the rotation velocity of the third stirring to be 500 rpm to 800 rpm can reduce production costs while ensuring the binding performance and filtration performance of the positive electrode slurry and the binding performance of the positive electrode plate.

From the comparison between Example 3, Examples 42 to 43 and Example 41, it can be seen that controlling the rotation velocity of the fourth stirring to be 1000 rpm to 1400 rpm can effectively reduce the discharge viscosity and viscosity after standing for 24 h of the positive electrode slurry, slow down the gelation of the positive electrode slurry, improve the filtration performance of the positive electrode slurry and enhance the binding performance of the positive electrode plate; from the comparison between Example 3, Examples 42 to 43 and Example 44, it can be seen that controlling the rotation velocity of the third stirring to be 1000 rpm to 1400 rpm can reduce production costs while ensuring the binding performance and filtration performance of the positive electrode slurry and the binding performance of the positive electrode plate.

It can be seen from the examples that the solid content of the positive electrode slurry disclosed in the present application is 63% to 73%, the viscosity of the positive electrode slurry is 8000 mPa·s to 35000 mPa·s, and the positive electrode slurry has good coatability and processability.

It should be noted that the present application is not limited to the above embodiments. The above embodiments are examples only, and any embodiment that has substantially the same constitutions and has the same effects as the technical ideas within the scope of the technical solutions of the present application is encompassed within the technical scope of the present application. In addition, without departing from the scope of the subject matter of the present application, various modifications that can be conceived by those skilled in the art are applied to the embodiments, and other modes constructed by combining some of the constituent elements of the embodiments are also included in the scope of the present application.

## Claims

1. A preparation method of a positive electrode slurry, comprising a first stirring, a second stirring, a third stirring and a fourth stirring;
in the first stirring, a positive electrode active material, a conductive agent and a first binder are mixed and stirred to prepare a dry mixture;
in the second stirring, a second binder and a solvent are mixed and stirred to prepare an adhesive solution;
in the third stirring, the dry mixture and the adhesive solution are mixed and stirred to prepare a primary slurry; and
in the fourth stirring, a solvent and the primary slurry are mixed and stirred to prepare the positive electrode slurry;
wherein, the weight average molecular weight of a polymer in the second binder is smaller than the weight average molecular weight of any polymer in the first binder.

2. The preparation method according to claim 1, wherein the second binder is polyvinylidene fluoride with a weight average molecular weight of no more than 4 million.

3. The preparation method according to claim 1 or 2, wherein the second binder is polyvinylidene fluoride with a weight average molecular weight of no more than 2 million.

4. The preparation method according to any one of claims 1 to 3, wherein the first binder comprises polyvinylidene fluoride with one or more weight average molecular weights, and the first binder comprises polyvinylidene fluoride with a weight average molecular weight of no less than 2 million.

5. The preparation method according to any one of claims 1 to 4, wherein the first binder comprises polyvinylidene fluoride with a weight average molecular weight of no less than 4 million.

6. The preparation method according to any one of claims 1 to 5, wherein the mass content of the second binder is 30% to 50%, based on the total mass of the first binder and the second binder.

7. The preparation method according to any one of claims 1 to 6, wherein for the first stirring, the rotation velocity is 0, and the revolution velocity is 10 rpm to 20 rpm.

8. The preparation method according to any one of claims 1 to 7, wherein the stirring time of the first stirring is 10 min to 25 min.

9. The preparation method according to any one of claims 1 to 8, wherein the revolution velocity of the second stirring is 20 rpm to 30 rpm.

10. The preparation method according to any one of claims 1 to 9, wherein the rotation velocity of the second stirring is 1000 rpm to 1400 rpm.

11. The preparation method according to any one of claims 1 to 10, wherein the stirring time of the second stirring is 60 min to 90 min.

12. The preparation method according to any one of claims 1 to 11, wherein for the third stirring, the stirring time is 60 min to 90 min, the revolution velocity is 20 rpm to 30 rpm, and the rotation velocity is 500 rpm to 800 rpm.

13. The preparation method according to any one of claims 1 to 12, wherein for the fourth stirring, the revolution velocity is 20 rpm to 30 rpm, the rotation velocity is 1000 rpm to 1400 rpm, and the stirring time is 90 min to 120 min.

14. The preparation method according to any one of claims 1 to 13, wherein the solid content of the positive electrode slurry is 63% to 73%, and the initial viscosity of the positive electrode slurry is 8000 mPa·s. to 35000 mPa·s.

15. The preparation method according to any one of claims 1 to 14, wherein the solvent used in the second stirring and the solvent used in the fourth stirring are the same, and based on the total mass of the conductive agent, the positive electrode active material, the first binder, and the second binder, the mass content of the solvent used in the second stirring is 35% to 40%, and the mass content of the solvent used in the fourth stirring is 5% to 10%.

16. The preparation method according to any one of claims 1 to 15, wherein in the positive electrode slurry, the ratio of the mass of the positive electrode active material, the total mass of the first binder and the second binder, and the mass of the conductive agent is (82-95):(3-10):(2-8).

17. The preparation method according to any one of claims 1 to 16, wherein the positive electrode active material is one or more of lithium iron phosphate, lithium cobalt oxide, and lithium manganate.

18. The preparation method according to any one of claims 1 to 17, wherein the conductive agent is one or more of conductive carbon black, graphite, and carbon nanotubes.

19. A positive electrode slurry prepared by the preparation method according to any one of claims 1 to 18.

20. The positive electrode slurry according to claim 19, wherein the solid content of the positive electrode slurry is 63% to 73%, the initial viscosity of the positive electrode slurry is 8000 mPa·s to 35000 mPa·s, and after standing for 24 h, the viscosity of the positive electrode slurry does not exceed 48000 mPa·s.

21. A positive electrode plate, comprising a positive electrode current collector and a positive electrode film layer arranged on at least one surface of the positive electrode current collector, wherein the positive electrode film layer is prepared from the positive electrode slurry prepared by the preparation method according to any one of claims 1 to 18.

22. The positive electrode plate according to claim 21, wherein the binding force per unit length between the positive electrode film layer and the positive electrode current collector is greater than 20 N/m.

23. A secondary battery, comprising a positive electrode plate, a separator, a negative electrode plate and an electrolyte solution, wherein the positive electrode plate is prepared from the positive electrode slurry prepared by the preparation method according to any one of claims 1 to 18 or the positive electrode slurry according to any one of claims 19 to 20.

24. The secondary battery according to claim 23, wherein the secondary battery is any one of a lithium-ion battery, a sodium-ion battery, a magnesium-ion battery, and a potassium-ion battery.

25. A battery module, comprising the secondary battery according to claim 23 or 24.

26. A battery pack, comprising the secondary battery according to claim 23 or 24 or the battery module according to claim 25.

27. An electrical apparatus, comprising at least one selected from the secondary battery according to claim 23 or 24, the battery module according to claim 25 or the battery pack according to claim 26.
